# EUROPEAN PATENT SPECIFICATION

(11) **EP 2 589 928 B1**
(45) Date of publication and mention of the grant of the patent: **14.10.2020**
(21) Application number: 11800129.6
(22) Date of filing: 16.06.2011
(51) Int. Cl.: G06T 7/00, B64D 15/20, G06T 7/40

(54) **DETECTING DEVICE FOR DETECTING ICING BY IMAGE AND DETECTING METHOD THEREOF**
VORRICHTUNG ZUR ERKENNUNG EINER VEREISUNG AN EINEM BILD UND ERKENNUNGSVERFAHREN DAFÜR
DISPOSITIF DE DÉTECTION POUR DÉTECTER LA FORMATION DE GLACE EN UTILISANT UNE IMAGE ET PROCÉDÉ DE DÉTECTION ASSOCIÉ

(30) Priority: 02.07.2010 CN 201010219377; 02.07.2010 CN 201010219357
(43) Date of publication of application: 08.05.2013
(73) Proprietor: Commercial Aircraft Corporation Of China Ltd, Shanghai 200120 (CN); Commercial Aircraft Corporation Of China Ltd Shanghai Aircraft Design and Research Institute, Shanghai 201210 (CN); Huazhong University of Science and Technology, Wuhan City Hubei 430074 (CN)
(72) Inventor: CHEN, Yingchun, Shanghai 201210 (CN); YE, Lin, Wuhan Hubei 430074 (CN); ZHANG, Miao, Shanghai 201210 (CN); GE, Junfeng, Wuhan Hubei 430074 (CN); FENG, Lijuan, Pudong New District Shanghai 201210 (CN); LIU, Tiejun, Pudong New District Shanghai 201210 (CN); ZHOU, Feng, Shanghai 201210 (CN)
(74) Representative: Bergmeier, Werner
(86) International application number: PCT/CN2011/075787
(87) International publication number: WO 2012/000384

(56) References cited:
- WO-A1-92/20575
- WO-A1-96/20465
- CN-A- 101 762 239
- CN-A- 101 762 239
- GB-A- 2 250 967
- US-A- 5 557 261
- US-A- 5 557 261
- US-A- 5 921 501
- US-A- 5 963 148
- US-A- 5 963 148
- US-B1- 6 173 231

## Description

### Field of the invention

The present invention relates to an image ice detecting device and a detecting method for obtaining information about ice conditions on a surface of an object by analyzing images of the surface of the object, including whether ice is formed, type of ice, thickness and/or area of the ice or the like.

### Background of the invention

In most cases, there is a need to detect or analyze ice conditions on a particular surface or position of the object. For example, in a cold region, there is a need to monitor the ice conditions on road surface in winter, to detect the ice conditions of blade and partial rotating members of a wind turbine, and monitor icing phenomena at many positions of an airplane (e.g., a wind shield, a front edge of an airfoil and a tail fin, and an air intake duct of an engine) during flight of the airplane to avoid adverse influence caused by the ice on the airplane, and prevent serious airplane flight accident caused by the ice. Noticeably, the technical term "ice" involved in the present application includes many kinds of ice, frost and mixture thereof.

To date, people have already designed and manufactured many kinds of ice detecting devices and proposed many ice-detecting methods so as to take corresponding measures to avoid the harms of icing. However, these already existing ice detecting devices and methods all have their respective drawbacks and shortcomings and therefore greatly affect the performance and application scope thereof.

For example, ice detecting devices and method in the early period includes a radiation type, an electrical conductivity type and a differential pressure type, wherein the radiation type ice detecting device and method causes serious harm to people's health, the electrical conductivity type ice detecting device and method exhibits an undesirable reliability, and the differential pressure type ice detecting device and method is disadvantageous in a large size, a complicated structure and a slow response speed. Besides, these several kinds of ice detecting devices and methods can only present qualitative detecting results of whether the ice is formed and cannot present quantitative information about ice thickness and the icing speed.

Currently, what are extensively applied are magnetostrictive vibration barrel type and piezoelectric diaphragm type ice detectors and methods. They can both present quantitative information of ice thickness in a certain range of ice thickness and icing speed. However, they have their respective drawbacks: the detector as used in the magnetostrictive vibration barrel type ice detecting method exhibits a complicated structure, high requirements for production process and difficult calibration, and cannot be mounted at a curved surface position (e.g., the front edge of the airfoil and tail fin of the airplane) in a flush and shape-preserving manner; the detector used in the piezoelectric diaphragm type ice detecting method has a smaller size and weight and can be mounted at a cured surface position in a flush and shape--preserving manner to a certain degree, but the sensitive material thereof imposes rigid production requirements and complex process and the assembling thereof is difficult.

In recent years, developers advance a new optical fiber type ice detector and detecting method which has prominent advantages such as a high detection sensitivity, a simple structure, a high reliability and achievement of the mounting in a flush and shape-preserving manner, as well as a certain capability of recognizing conventional types of ice (clear ice, rime ice or mixed type ice). However, the optical fiber type ice detector has the following drawbacks: first, it cannot achieve detection of supercooled large droplet icing (hereinafter referred to as SLD); secondly, it cannot eliminate or completely eliminate the influence exerted by the types of ice on quantitative analysis; besides, it can only achieve point detection and cannot detect a surface with larger dimensions.

There are some attempts for detection of supercooled large droplet icing in the prior art. For example, a device of detecting supercooled large droplet icing is disclosed in the US patents with publication numbers US2002/0158768 A1 and US2004/0231410 A1 and the international patent application with application number PCT/US012106. However, kernel sensing and detecting elements of these detectors still employ magnetostrictive resonant type and piezoelectric icing sensors, so they inevitably have common drawbacks of the conventional ice detectors as mentioned above.

The invention of CN 101762239 A relates to a device and a method for measuring the ice accumulation on an electrical wire. The device can conveniently and fast detect the thickness of the ice accumulation on the electrical wire. Different types of ices cannot be identified by this device.

US 5,557,261 A discloses an ice monitoring and detection system for determining the presence and thickness of ice on a surface. An imaging device includes a lens for providing image signals which are processed and compared with former signals by a processor. The difference between the changes serves as indication of the amount of ice on the surface.

According to US 5,963,148 A and US 6,173,231 B1 a road is analyzed in respect of its temperature profile. A low-temperature zone is determined that there is snow or ice existing on the road. Such an analysis is too little detailed for a sophisticated counter-measurement.

UK 2 250 967 A again only detects build-up of ice on a structure. It discloses an improved camera but not a detailed analysis of the kind of ice on the structure.

WO 92/20575 A1 describes an ice detection system including an ice detection camera and a color video monitor. On the color video monitor, surface of the surveilled object, ice, water and other substances are shown in different colors. The kind of the ice cannot be detected.

With regard to accurate recognition of types of ice, although the detectors in the prior art can achieve judgment of the types of ice to some degree, but the accuracy thereof is relatively low. Accurate quantitative analysis of the ice must be based on accurate recognition of the types of ice. Therefore, in the conventional ice detectors, ice with different thicknesses might correspond to the same output signal because the types of the ice are different.

### Summary of the invention

An object of the present invention is to provide a novel image ice detector and detecting method, which can use image processing technology to process images of the ice layer so as to identify differences between image characteristics included in different icing images, and accurately identify, according to these differences, types of ice and calculate data such as the ice thickness.

According to one aspect of the present invention, there is provided an image ice detector according to claim 1.

By virtue of the above technical solution, judgment of the ice conditions no longer relies on simple sensor signals, but on comprehensive information analysis of the whole image from a plurality of aspects, thereby substantially improving precision of qualitative detection of identifying types of ice and quantitative detection of ice thickness, icing speed and/or ice area.

Preferably, the marking module performs marking mainly according to brightness of icing images, which is the most visual icing property reflective of the ice conditions. Two kinds of effects, namely, reflection effect and scattering effect, always concurrently exist in the ice layer. Ice of different types with different thicknesses is different in respect of both the reflection effect and scattering effect. Distinguishing different brightness can not only identify the corresponding reflection effect and scattering effect very well, but also identify the corresponding ice conditions.

Preferably, the marking module comprises a grayscale analyzing module which is configured to mark the image with several parameters bases on grayscale and/or a chromatograph analyzing module which is configured to mark the image with several parameters based on chromatograph.

Preferably, the image processing system comprises a point taking module configured to acquire from the image at least part of pixel points for parameter marking via the marking module. Points may be evenly taken from the whole image so as to reduce amount of data to be processed, or different areas of the image may be distinguished according to the needs so that points are taken intensively in important areas so that detection results are purposeful.

Preferably, the basis for the calculating module to calculate the characteristic factor is magnitude and/or distribution of the marked parameters.

Preferably, the surface image is divided into a plurality of areas, and the characteristic factor is calculated for each of the areas. As such, results of the plurality of areas may be compared to avoid or reduce mistakes and errors of detection.

Preferably, the calculating module obtains the characteristic factor by statistics.

Preferably, a range of values for conducting marking of the parameters by the marking module is divided into a plurality of sections, and distribution of the marked parameters in these sections is regarded as the characteristic factor.

Preferably, the calculating module calculates variances and/or a sum of the marked parameters which are regarded as the characteristic factors.

According to another aspect of the present invention, there is provided an ice detector of an aircraft, comprising the image ice detector according to the first aspect of the present invention.

According to a further aspect of the present invention, there is provided a method of detecting ice conditions on the object surface, as defined in claim 11.

By virtue of the above technical solution, judgment of the ice conditions no longer relies on simple sensor signals, but on comprehensive information analysis of the whole image from a plurality of aspects, thereby substantially improving precision of qualitative detection of identifying types of ice and quantitative detection of ice thickness, icing speed and/or ice area.

The image ice detector and detecting method according to the present invention can be extensively applied to ice diction in many fields such as transportation, electrical apparatus, field operation apparatus and refrigerating apparatus, and is particularly adapted to meet the needs of ice detection of various aircrafts to perform ice detection of different functions and requirements.

### Brief description of drawings

Embodiments of the present invention are described in detail with reference to the following figures:
- **Fig. 1**: is a schematic view of an image acquiring system in an image ice detector according to a first preferred embodiment of the present invention;
- **Fig. 2**: is a schematic view of an image processing system in the image ice detector according to the first preferred embodiment of the present invention;
- **Fig. 3**: is a schematic view of an image ice detector according to a second preferred embodiment of the present invention, wherein an arrangement mode of micro detection is shown;
- **Fig. 4**: is a schematic view of an image ice detector according to a third preferred embodiment of the present invention, wherein an arrangement mode of macro detection is shown;
- **Fig. 5**: is a schematic view of an image ice detector according to a fourth preferred embodiment of the present invention, wherein an arrangement mode in which the detector detects from a side of an ice layer is shown.

### Detailed description of preferred embodiments

Preferred embodiments of the present invention will be described in detail with reference to the figures.

An image ice detector according to a first preferred embodiment of the present invention mainly comprises an image acquiring system and an image processing system, wherein the former is configured to acquire images from the surface of the object, and then the latter calculates and analyzes the acquired surface images so as to finally obtain the ice conditions of the surface of the object.

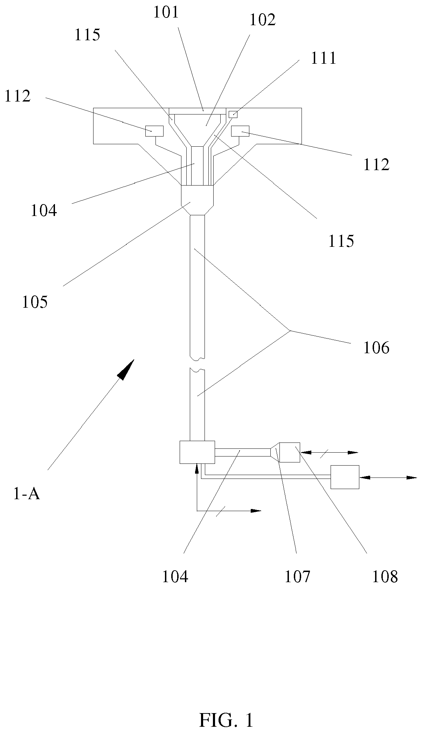

First referring to Fig. 1, what is shown is an image acquiring system 1-A of the image ice detector according to the first preferred embodiment of the present invention.

A kernel part of the image acquiring system 1-A is an image-transmitting optical fiber harness 104 which is configured to receive the surface image of the object at a front end thereof and transmit the surface image along the optical fibers therein to other parts connected at a rear end thereof. The structure and principles of the image-transmitting optical fiber harness 104 are already well known by those skilled in the art and does not fall within the scope of the present invention. Furthermore, as a mature technology, the image-transmitting optical fiber harness has already been extensively applied into many fields (e.g., a gastroscope) and therefore will not be described in detail again herein.

The image-transmitting optical fiber harness 104 used in the present embodiment is advantageous in that as the image-transmitting optical fiber harness 104 can achieve high-quality spread of images, images on the surface of the object may be completely transmitted to a position far away from the surface of the object and is finally received by an image fixing means arranged at the position far away from the surface of the object. This advantage is very important for some particular applications.

In one example, there is a strict requirement for the dimensions of the space nearby the surface of the object to be detected (for example, an airfoil of an aircraft), whereupon only an apparatus meeting the conditions for dimensions is allowed to be mounted. It is very difficult for the conventional imaging apparatus to meet the dimension requirement, so the apparatus cannot be applied. However, through the image-transmitting optical fiber harness, only a front end of the image-transmitting optical fiber harness with very small dimensions is disposed nearby the surface of the object (e.g., the airfoil), and a rear end thereof is connected to an imaging apparatus located at a position far away from the airfoil, for example, located in an interior of the plane compartment. As such, even an imaging (comprising photography and video camera) apparatus with a larger size in the prior art can be applied. By this method, the same effect as a miniaturized design can be achieved without conducting miniaturized design of the imaging apparatus.

In another example, the environment of the surface of the object to be detected is very severe. At this time, the image-transmitting optical fiber harness is used so that the imaging apparatus can be disposed far away from the surface of the object and only image-transmitting optical fiber harness is retained nearby the surface of the object. Since the image-transmitting optical fiber harness itself is simple in structure and not liable to damages, it can be conveniently applied to various detection environments and protect the imaging apparatus relatively liable to damages.

In practical applications, the dimensions of the employed image-transmitting optical fibers, the number of optical fibers and an arrangement mode of the optical fibers can be reasonably determined according to different application occasions and specific embodiments. This will not be described in detail in the present embodiment.

A focusing lens 1023 is connected at the front end of the image-transmitting optical fiber harness 104 to receive the image from the surface of the object. The type of the focusing lens may be selected appropriately according to the difference of application forms. As described hereunder, in near-distance micro detection, a head of the image-transmitting optical fiber harness 104 is very close to the object surface, whereupon the focusing lens 102 needs to employ a macro lens; in contrast, in long-distance macro detection, the focusing lens 102 need employ a long focal length lens or a fish-eye wide-angle lens.

The front end of the focusing lens 102 may further be provided with a protective lens 101 for protecting the focusing lens 102 from damages from the ambient environment, e.g., avoiding wear of dusts entrained by high-speed airflow on the surface of the object.

At the rear end of the image-transmitting optical fiber harness 104 are connected in series in turn a coupling lens 107 functioning as the image fixing means and an image sensor 108, wherein the coupling lens 107 is configured to transmit the image converged by the focusing lens 102 and transmitted by the image-transmitting optical fiber harness 104 to the image sensor 108, and the image is converted by the image sensor 108 as image information that can be identified by a digital system, and the image information is provided for analysis by the image processing system (not shown in Fig. 1) connected thereafter. Depending on practical situations, the image sensor 108 may comprise a CCD type or CMOS type image sensor, or may also comprise infrared and/or ultraviolet image sensor so as to detect infrared and/or ultraviolet rays in the image of the surface of the object.

In addition, at the front end of the image-transmitting optical fiber harness 104 is further provided an electromagnetic wave emitting means 115 which is configured to emit to the subject of the object electromagnetic waves of certain power and certain wave bands, including visible light (400-760 nanometers), infrared ray (760 nanometers to 1000 microns) and/or ultraviolet ray (1 to 400 nanometers), and combinations thereof, to achieve active detection. Its advantage lies in that it can not only overcome unfavorable influence caused by insufficient ambient light to the detection, but also select electromagnetic waves of some particular wave bands as a detection source according to the needs of detection, so as to be particularly adapted to detect ice of specific types in a specific range of thickness. In addition, composite detection can be achieved so that image information in some applications is richer. Certainly, those skilled in the art appreciate that the detection does not necessarily depend on an active signal source, and ambient light such as natural light is sufficient to meet the detection requirement in many applications. Furthermore, is some applications, the active signal source needn't be added deliberately, and the already existing apparatus nearby the surface of the object can be used, for example, in application of aircraft, a signal light on the aircraft surface may be used the active signal source.

Meanwhile, the image informations of different spectrums may be selectively obtained via a light filter (not shown) provided between the protective lens 101 and the image sensor 108.

Furthermore, in order for smooth detection, an anti-ice and/or deicing means may be provided nearby the protective lens 101 and the focusing lens 102, for example, a shield (not shown) and/or a miniature electrical heater 112 disposed on the surface in the face of wind, to avoid and/or eliminate the ice formed on the protective lens 101, thereby excluding the influence on the detection results. An extra temperature sensor 111 may be further provided, on the one hand, to avoid damaging the object surface or the image-transmitting optical fibers due to too high a heating temperature, and, on the other hand, because the temperature is an important factor for analyzing the ice conditions.

The image acquiring system 1-A further comprises some other accessory parts such as a flexible protective joint 105 and a protective sleeve 106 for protecting the image-transmitting optical fiber harness 104, and a connection line 116 connected to an electromagnetic wave transmitting means 115, and a power source line and a control-signal line and so on as needed in operation of the apparatus. No detailed description thereof will be presented here.

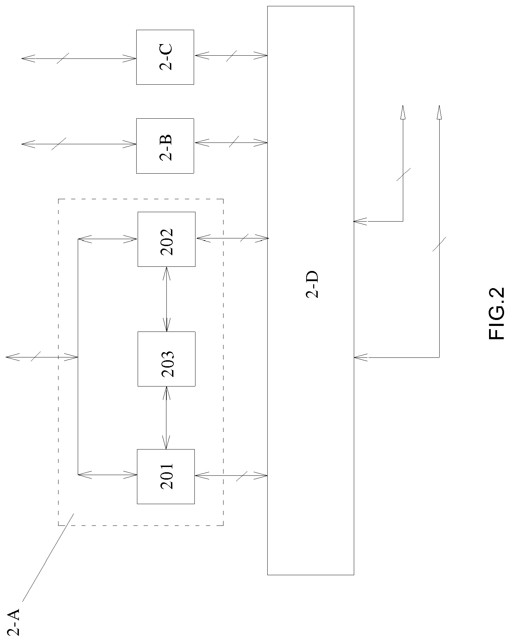

Then referring to Fig. 2, the figure shows a control portion of the image ice detector according to the first preferred embodiment of the present invention. As shown in Fig. 2, the control portion mainly comprises an image processing system 2-A, a temperature measuring and controlling system 2-B, a light source controlling system 2-C and a central microprocessor 2-D.

The image processing system 2-A comprises three portions: an ice early-warning unit 201, an ice analyzing unit 202 and an ice condition database 203.

The ice early-warning unit 201 is dedicated for image information processing in an initial phase of icing and it can employ high-speed image processing electronic system technology and can quickly obtain ice condition information in the initial phase of the icing and sends an alarm signal indicative of the start of icing. If the ice early-warning unit 201 is used in cooperation with a probe whose shape is specially designed in a way that it is more liable to icing than the surface of the object to be detected, the ice early-warning unit 201 can achieve an effect of sending an early warning in advance before the surface of the object starts to ice.

The ice early-warning unit 201 operates in the following procedure: after the image information transmitted by the image fixing means is received, the image information is compared with clean and iceless images when ice is not formed stored in the ice condition database 203 to judge whether icing happens. Regarding the specific judging procedure, reference may be made to the following depictions of the icing analyzing unit 202.

The icing analyzing unit 202 operates concurrently with the ice early-warning unit 201, and can make qualitative and quantitative analysis of specific ice conditions (types of ice, thickness of ice and/or ice area) of the surface of the object. It substantially comprises a parameter marking module, a calculating module and a judging module (all not shown in the figures).

Upon receipt of the image information transmitted by the image fixing means, the ice analyzing unit 202 first conducts parameter marking for the images via the parameter marking module. A marking manner used may comprise grayscale processing and chromatograph analyzing processing which are implemented by a grayscale analyzing module and a chromatograph analyzing module respectively, wherein the chromatograph analyzing processing comprises analyzing by using a single color or multiple colors (e.g., three primary colors). Furthermore, the marking may be conducted with respect to all pixel points of the image or with respect to several pixel points selected therefrom by a point taking module. It is also feasible to select a plurality of regions from the image and obtain an average value of each region, which mainly depends on the requirements for a detection precision and speed. Upon completion of the parameter marking for the surface image, the parameters obtained from the marking will be transmitted to the calculating module.

The calculating module functions to, by calculating the received marked parameters, obtain characteristic factors corresponding to the current surface image for the subsequent judging module to compare them with the characteristics features in the ice condition database 203.

The employed calculating method for example may comprise statistics. Specifically speaking, a range of values for conducting the parameter marking by the marking module may be divided into several sections according to a predetermined standard, statistics is carried out for times that all the marked parameters fall within the respective sections to thereby obtain a percentage thereof. In this example, the distribution of the marked parameters in the respective sections is the characteristic factor that the image of the surface of the object corresponds to. Certainly, those skilled in the art can readily envisage that the division of the sections may employ an uneven manner according to the experiment results.

Certainly, the above method is only a simple one of feasible calculating methods. Upon specific embodiment, a more complicated calculating method may be employed to obtain a more precise characteristic factor. This will be further mentioned in the following depictions.

The judging module functions as above stated and is configured to compare the characteristic factor obtained from calculation with the already existing data in the ice condition database 203 so as to find the characteristic data closest to the current characteristic factor. The ice conditions (including types of ice, thickness of ice and/or ice area) that the characteristic data correspond to may be considered the current ice conditions at the surface of the object. Certainly, in the judging procedure may be introduced new reference quantity such as an ambient temperature obtained by a temperature sensor 111.

The ice condition database 203 is obtained by carrying out a lot of simulation experiments and processing and sorting actual detection results. The ice condition database 203 may comprises several data, each data comprising information (types of ice, thickness of ice and/or ice area) of a specific ice condition and the characteristic data corresponding to the ice condition, for the judging module to compare the characteristic data with the characteristic factor obtained from the calculation to obtain the corresponding ice condition.

In order to better understand the content of the instant invention, a simple depiction is presented for the working principles of the instant invention as follows.

Regardless in visible light, infrared wave bands or ultraviolet wave bands, optical characteristics (ice layer-air interface reflection, scattering and absorption in the ice layer etc.) of the ice layer vary with the changes of the ice conditions so as to form icing images with obvious differences. The differences between images of icing and none icing, images of different types of ice and images of ice with different thickness are very obvious.

Upon studying the types of ice, uniformity of image properties such as brightness value (including grayscale brightness and three primary color brightness) may be studied. When the ice is clear ice, since an interior of the ice layer is approximately transparent, electromagnetic waves reflected on the ice layer and the air interface can be received by the image-transmitting optical fiber harness with a larger intensity, so the brightness value of the image pixels is larger and even. When the ice is rime ice, since the ice layer entrains air bubbles, the reflection effect is greatly reduced and a scattering effect is strong, so the brightness value of the image pixels is smaller and uneven. The mixed type ice is intermediate between the clear ice and the rime ice.

Upon studying the thickness of the ice, the brightness of the ice layer may also be studied because after the type of ice is determined, in a certain range of ice thickness, the greater the ice thickness is, the brightness of the image pixels is greater.

In the following, the entire operation procedure of the ice analyzing unit 202 will be described by taking two examples to make the working principles and advantages of the ice analyzing unit 202 more apparent.

In a first example, upon receipt of the images transmitted by the image fixing means, the point taking module in the ice analyzing unit 202 first selects several (for example N) pixel points therefrom according to predetermined rules. The so-called rules means that points may be taken only in a specific region of the image, points may be taken relatively intensively in some regions whereas points are selected relatively sparsely in other regions, and so on. Then, the parameter marking module conducts three primary color analysis for each of the selected pixel points by means of commonly-used software in the field of image processing, to respectively obtain the three primary color value of each pixel, thereby completing the parameter marking. Take an 8-bit microprocessor system as an example, the range of values of each of the three primary colors is in a range of 0-255.

The three primary color values upon completion of marking are transmitted to the calculating module. First, each point is directed to the section it corresponds to according to sections of three primary color values duly divided in advance. Each of the three primary color values may be divided as needed, for example, red light, green light and blue light are respectively evenly or unevenly divided into p, q and r sections, so that totally K = p × q × r three primary color value sections are formed. Then, statistics is made for the number n₁, n₂, n₃ ... n_{K} of points falling within the respective sections and percentages m₁, m₂, m₃ ...m_{K} that the respective numbers account for in the total number N of points. The number of points {n₁, n₂, n₃ ... n_{K}} or percentages {m₁, m₂, m₃ ... m_{K}} serve as characteristic factors corresponding to the current surface images.

Finally, the judging module is used to compare the characteristic factors obtained from calculation with the characteristic data stored in the ice condition database 203 so as to select from the database one data closest to the current ice condition, and use the information (types of ice, thickness of ice and/or ice area) of ice conditions included in said one data as the current ice conditions of the surface of the object.

In a second example, the working procedure of the parameter marking module is no substantially different from that of the judging module, but the calculating module employs a different calculating method.

Upon studying the types of ice, a variance of the pixel brightness value may be used as the characteristic factor for judgment so that the distribution of brightness can be more clearly seen; when the ice layer thickness is studied, a sum of brightness values of all pixel points may be considered as a final characteristic factor. Quantitative detecting results of the magnitude of the ice thickness can be conveniently obtained by comparing variances and a sum of brightness values of all pixel points obtained from calculation with the already existing characteristic data in the ice condition database 203.

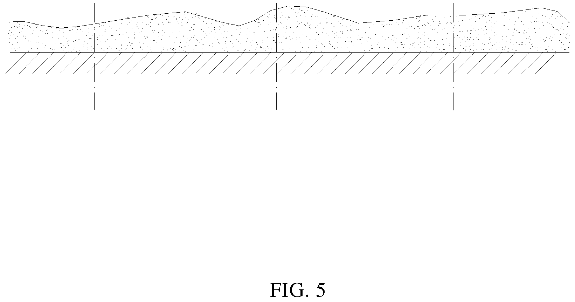

In addition, although not described in detail, those skilled in the art can envisage that the above detector and detecting method can achieve direct identification and solution of the ice layer thickness as observed from the side. As shown in Fig. 5, the ice area and the object surface area can be clearly distinguished by identifying grayscale and colors and the like in the images, an average value of the ice layer thicknesses is solved by selecting a plurality of measurement points by analyzing the icing images, and the thickness of the whole ice layer can be easily solved.

In addition to the above embodiments, those skilled in the art can also envisage other improvement measures to further improve performance. For example, after the grayscale and/or chromatogram values of the respective points are obtained, they are not directly used for calculation, instead, a difference obtained by comparing the grayscale and/or chromatogram values with the grayscale and/or chromatogram values in the clean iceless images is used as a marking parameter for subsequent calculation and judgment; the object surface may also be divided into several areas, then independent calculation and judgment is carried out for each area so that the judgment results of respective areas are corroborated so as to reduce the detection error.

Function units except for the image processing system 2-A will be briefly described hereunder, wherein these function units can all employ the already existing solutions in the prior art and do not belong to the contents of the present invention.

The temperature measuring and controlling system 2-B is configured to acquire a temperature signal of the temperature sensor 111 and compare the temperature signal with a preset temperature value so as to serve as a control basis for the operation of the heater 112. Furthermore, the temperature value may also be transmitted to the judging module as a reference quantity for judging the current ice conditions.

The light source controlling unit 2-C controls the working of the electromagnetic wave emitting means 115, i.e., controls the types of electromagnetic waves, emition time and an emitting power and the like. The electromagnetic wave emitting means 115 may work continuously, or work intermittently regularly or irregularly. In a regular intermittent working state, 1-20Hz may be selected as the emitting frequency of the electromagnetic waves, which may conduct coordination with the image acquiring system, but also ensure a sufficiently fast detecting speed.

In a non-continuous working state, the central microprocessor 2-D may be used to coordinate the working of the light source controlling unit 2-C and the image processing system 2-A so that only when the electromagnetic wave transmitting means 115 works can the image processing system 2-A work.

The central microprocessor 2-D may implement control of the image processing system 2-A, the temperature measuring and controlling system 2-B and the light source controlling unit 2-C and the information exchange there-bet-ween so as to perform the functions of the respective units.

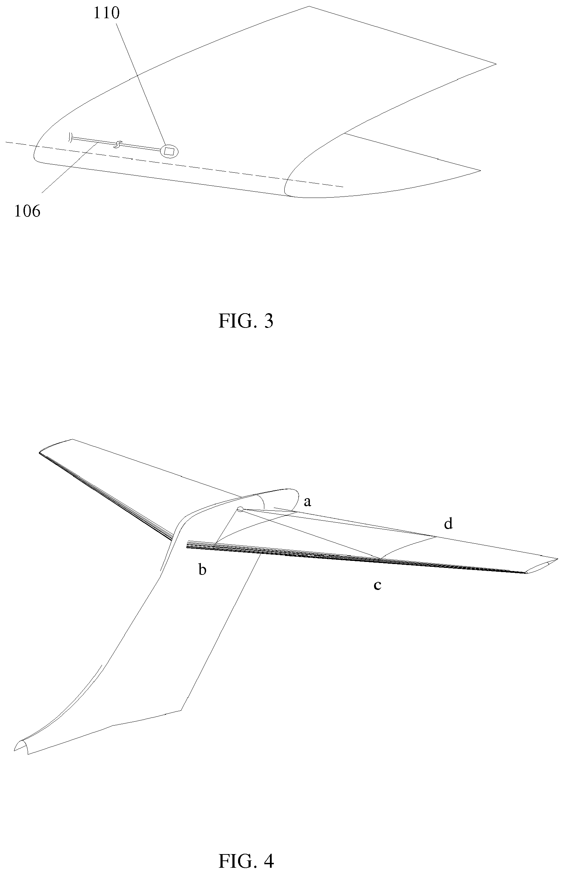

Then referring to Figs.3 and 4, ice detection of aircraft is taken as an example to illustrate two applications of the ice detector and detecting method according to the present invention, wherein the internal structure of the detector is substantially identical with the structure of the previous embodiment and will not be repeated here for the sake of brevity.

The ice detector and detecting method according to the present invention may be used to perform micro detection of ice conditions in smaller areas of the surface of the object. For example, as shown in Fig. 3, a front end 110 of the image acquiring system is buried in the surface of the aircraft and faces towards outside, the image-transmitting optical fiber harness is in the protective sleeve 106 and is led out from the front end 110 and extends to the image processing system (not shown) far away from the front end. In this application, the focusing lens employs a macro lens, the acquired image is only limited to a very limited area aligned by the front end. However, since the distance is very short, micro detection of the internal images of the ice layer may be achieved, and the precision of the acquired image information is very high. Accordingly, an increase of the ice thickness in a unit time obtained therewith, namely, the icing speed, is more precise accordingly.

Noticeably, in this arrangement mode, it is inevitable that the front end of the detector get iced, otherwise ice detection will not be achieved. However, at this time, a deicing means may still be provided to restore the detector.

The ice detector and detecting method according to the present invention may further be used to perform macro detection of ice conditions in larger areas of the surface of the object. As shown in Fig. 4, the detector is mounted on a vertical fin of the aircraft and inclined towards the surface of the tail fin. In this application, the focusing lens employs a long focal length lens or a fish-eye wide-angle lens, and the parameters of the lens are adjusted so that clear images may be obtained for the whole surface area (e.g., the rectangular area a-b-c-d as shown in the figure) for which ice detection needs to be performed.

In this arrangement mode, ice cannot exist at the front end of the detector, otherwise the icing images of the surface of the object to be detected cannot be obtained. At this time, it appears very important to provide anti-ice and deicing means. Furthermore, since the image-transmitting optical fiber harness includes high temperature-resistant glass optical fibers or quartz optical fibers, the detector will not be damaged so long as the temperature of the heating device is not too high.

This detection form for larger areas of the surface of the object exhibits a lower precision than the previous form in respect of detection of local points, but it can achieve whole detection of the whole area scope. From this perspective, it can improve a general analyzing precision of the ice conditions. Since the uneven distribution of the ice layer might cause results of point detection not to represent the whole ice conditions, a conclusion drawn from several particular points deviates from actual situations.

In addition, this macro detection form may produce particular technical effects in some particular applications, for example, detection of "rearward drift ice" formed by supercooled large droplets can be performed. This is of great importance for ice detection in the field such as the aircraft.

The so-called supercooled large droplets refer to supercooled droplets with a median volume diameter exceeding 50 microns. Since the supercooled large droplets have a greater mass, a quantity of latent heat needs to be radiated before ice is formed. The droplets still remain in a liquid state within a period of time and will not get iced after they contact the surface of for example the aircraft, and only when the latent heat of the liquid is completely released will the icing happen on the surface in a certain distance rearward in a direction of the airflow. Therefore, in the case of "backward drift ice", there will be a particular situation that ice is not formed at the front edge position of the airfoil and tail fin of for example the aircraft, and ice is formed at the non-protective position behind the front edge.

According to the conventional detecting method, if this type of ice needs to be detected, many ice detector units need to be provided on larger positions. As such, this not only requires a large mounting space, but also causes damages to the structure of the surface of the object, and furthermore, providing a plurality of ice detector units will substantially increase the costs.

Furthermore, if the above arrangement for performing macro detection for the ice conditions in larger areas of the surface of the object is employed, it can very easily achieve detection of "rearward drift ice". What needs to be done is only to amend the algorithm in the calculating module (for example, the surface of the object to be detected is sectioned in the direction of airflow, and calculation is done for each of the sections) to enable it to identify the situation that ice is not formed on a front section of the surface of the object in the direction of the airflow, but ice is formed in a rear section of the surface of the object. As such, the detection of "rearward drift ice" is achieved.

What is described above is preferred embodiments of the present invention. However, it shall be appreciated that those skilled in the art, after reading through the above description, can readily envisage other specific modes for implementing the present invention, and these specific modes are obvious. The inventor anticipates that those skilled in the art can make suitable changes, and these changes all shall be included in the protection scope defined by the appended claim set.

## Claims

1. An image ice detector, comprising: an image acquiring system (1-A) and an image processing system (2-A), wherein
the image acquiring system (1-A) is configured to acquire images of a surface of an object, and
the image processing system (2-A) is configured to analyze the acquired images to identify differences between image characteristics included in different icing images, and accurately identify, according to these differences, ice conditions of the surface of the object, wherein the ice conditions comprise types of ice, ice thickness and ice area;
wherein the image processing system (2-A) comprises:
an ice early-warning unit (201) for judging whether ice is formed on the surface of the object;
an ice analyzing unit (202) including a marking module, a calculating module and a judging module, wherein the marking module is configured to mark the image with several parameters related to ice conditions, the calculating module is configured to calculate the marked parameters to obtain characteristic factors of said image, and said judging module is configured to judge and obtain said ice conditions of the surface of the object based on the characteristic factors; and
an ice condition database (203) comprising characteristic data corresponding to various ice conditions, for comparison with the characteristic factors;
wherein the icing analyzing unit (202) operates concurrently with the ice early-warning unit (201), and can make qualitative and quantitative analysis of specific ice conditions of the surface of the object;
wherein the type of ice is determined and the thickness of ice is studied;
wherein the type of ice is determined by using a variance of the pixel brightness value as the characteristic factor for judgment, and the thickness of ice is studied with use of a sum of brightness values of all pixel points as a final characteristic factor.

2. The image ice detector according to claim 1, wherein the marking module marks the image based on brightness of the image.

3. The image ice detector according to claim 1, wherein the marking module comprises a grayscale analyzing module which is configured to mark the image with several parameters of grayscale and/or a chromatograph analyzing module which is configured to mark the image with several parameters of chromatograph.

4. The image ice detector according to claim 1, wherein the image processing system (2-A) comprises a point taking module configured to acquire from the image at least part of pixel points, and the marking module marks these pixel points with parameters.

5. The image ice detector according to claim 1, wherein the calculating module calculates the characteristic factors based on magnitude and/or distribution of the marked parameters.

6. The image ice detector according to claim 1, wherein the image is divided into a plurality of areas, and the calculating module calculates the characteristic factors for each of the areas.

7. The image ice detector according to claim 1, wherein the calculating module obtains the characteristic factors by statistics.

8. The image ice detector according to claim 7, wherein a range of values for conducting marking of the parameters via the marking module is divided into a plurality of sections, and the calculating module considers distribution of the marked parameters in the plurality of sections as the characteristic factors.

9. The image ice detector according to claim 7, wherein the calculating module calculates variances and/or a sum of the marked parameters which are regarded as the characteristic factors.

10. An ice detector of an aircraft, comprising the image ice detector according to claim 1.

11. A method of detecting ice conditions on an object surface, comprising the following steps occurring concurrently with the step of judging whether ice is formed on the surface of the object:
- acquiring an image of the object surface to be detected,
- analyzing the image to identify differences between image characteristics included in different icing images, and accurately identify, according to these differences, the ice conditions of the object surface, wherein the ice conditions comprise types of ice, ice thickness and ice area;
wherein analyzing the image comprises:
- marking the image with several parameters related to the ice conditions,
- calculating for the marked parameters to obtain the characteristic factors of the image,
- obtaining, according to the characteristic factors,
the ice conditions of the object surface;
wherein the type of ice is determined and the thickness of ice is studied;
wherein the type of ice is determined by using a variance of the pixel brightness value as the characteristic factor for judgment, and the thickness of ice is studied with use of a sum of brightness values of all pixel points as a final characteristic factor.

## Patentansprüche

1. Bild-Eismelder, umfassend: ein Bilderfassungssystem (1-A) und ein Bildverarbeitungssystem (2-A), wobei
das Bilderfassungssystem (1-A) ausgelegt ist, Bilder einer Oberfläche eines Objekts zu erfassen, und
das Bildverarbeitungssystem (2-A) ausgelegt ist, die erfassten Bilder zu analysieren, um Unterschiede zwischen Bildeigenschaften zu erkennen, die in verschiedenen Vereisungsbildern enthalten sind, und gemäß diesen Unterschieden Eiszustände der Oberfläche des Objekts genau zu erkennen, wobei die Eiszustände Eistypen, Eisdicke und Eisausdehnung umfassen;
wobei das Bildverarbeitungssystem (2-A) umfasst:
eine Eis-Frühwarneinheit (201) zum Beurteilen, ob sich Eis auf der Oberfläche des Objekts bildet;
eine Eisanalyseeinheit (202), enthaltend ein Markierungsmodul, ein Berechnungsmodul und ein Beurteilungsmodul, wobei das Markierungsmodul ausgelegt ist, das Bild mit mehreren Parametern hinsichtlich Eiszuständen zu markieren, das Berechnungsmodul ausgelegt ist, die markierten Parameter zu berechnen, um charakteristische Faktoren des Bildes zu erhalten, und das Beurteilungsmodul ausgelegt ist, zu beurteilen und die Eiszustände der Oberfläche des Objekts auf Grundlage der charakteristischen Faktoren zu erhalten; und
eine Eiszustandsdatenbank (203), umfassend charakteristische Daten, die verschiedenen Eiszuständen entsprechen, zum Vergleich mit den charakteristischen Faktoren;
wobei die Vereisungsanalyseeinheit (202) gleichzeitig mit der Eis-Frühwarneinheit (201) arbeitet und eine qualitative und quantitative Analyse bestimmter Eiszustände der Oberfläche des Objekts vornehmen kann;
wobei der Eistyp bestimmt wird und die Eisdicke untersucht wird;
wobei der Eistyp unter Verwendung einer Streuung des Pixelhelligkeitswerts als der charakteristische Faktor zur Beurteilung bestimmt wird und die Eisdicke unter Verwendung einer Summe von Helligkeitswerten aller Pixelpunkte als endgültiger charakteristischer Faktor untersucht wird.

2. Bild-Eismelder nach Anspruch 1, wobei das Markierungsmodul das Bild auf Grundlage der Helligkeit des Bildes markiert.

3. Bild-Eismelder nach Anspruch 1, wobei das Markierungsmodul ein Grauskala-Analysemodul, das ausgelegt ist, das Bild mit mehreren Grauskala-Parametern zu markieren, und/oder ein Chromatographen-Analysemodul, das ausgelegt ist, das Bild mit mehreren Chromatographen-Parametern zu markieren umfasst.

4. Bild-Eismelder nach Anspruch 1, wobei das Bildverarbeitungssystem (2-A) ein Punktentnahmemodul umfasst, das ausgelegt ist, aus dem Bild zumindest einen Teil der Pixelpunkte zu erlangen, und das Markierungsmodul diese Pixelpunkte mit Parametern markiert.

5. Bild-Eismelder nach Anspruch 1, wobei das Berechnungsmodul die charakteristischen Faktoren auf Grundlage der Größe und/oder Verteilung der markierten Parameter berechnet.

6. Bild-Eismelder nach Anspruch 1, wobei das Bild in eine Vielzahl von Bereichen aufgeteilt ist und das Berechnungsmodul die charakteristischen Faktoren für jeden der Bereiche berechnet.

7. Bild-Eismelder nach Anspruch 1, wobei das Berechnungsmodul die charakteristischen Faktoren durch Statistik erlangt.

8. Bild-Eismelder nach Anspruch 7, wobei ein Wertebereich zum Durchführen des Markierens der Parameter über das Markierungsmodul in eine Vielzahl von Abschnitten unterteilt ist und das Berechnungsmodul eine Verteilung der markierten Parameter in der Vielzahl von Abschnitten als die charakteristischen Faktoren berücksichtigt.

9. Bild-Eismelder nach Anspruch 7, wobei das Berechnungsmodul eine Streuung und/oder eine Summe der markierten Parameter berechnet, die als die charakteristischen Faktoren betrachtet werden.

10. Eismelder eines Flugzeugs, umfassend den Bild-Eismelder nach Anspruch 1.

11. Verfahren zum Ermitteln von Eiszuständen einer Objektoberfläche, umfassend die folgenden Schritte, die gleichzeitig mit dem Schritt des Beurteilens erfolgen, ob Eis auf der Oberfläche des Objekts gebildet ist:
- Erlangen eines Bildes der zu ermittelnden Objektoberfläche,
- Analysieren des Bildes, um Unterschiede zwischen Bildeigenschaften zu erkennen, die in verschiedenen Vereisungsbildern enthalten sind, und gemäß diesen Unterschieden die Eiszustände der Objektoberfläche genau zu erkennen, wobei die Eiszustände Eistypen, Eisdicke und Eisausdehnung umfassen;
wobei das Analysieren des Bildes umfasst:
- Markieren des Bildes mit mehreren Parametern hinsichtlich Eiszuständen,
- Berechnen nach den markierten Parametern, um die charakteristischen Faktoren des Bildes zu erhalten,
- Erlangen der Eiszustände der Objektoberfläche gemäß den
charakteristischen Faktoren;
wobei der Eistyp bestimmt wird und die Eisdicke untersucht wird;
wobei der Eistyp unter Verwendung einer Streuung des Pixelhelligkeitswerts als der charakteristische Faktor zur Beurteilung bestimmt wird und die Eisdicke unter Verwendung einer Summe von Helligkeitswerten aller Pixelpunkte als endgültiger charakteristischer Faktor untersucht wird.

## Revendications

1. Détecteur de givrage dans une image, comprenant : un système d'acquisition (1-A) d'images et un système de traitement (2-A) d'images, dans lequel
le système d'acquisition (1-A) d'images est configuré pour acquérir des images d'une surface d'un objet, et
le système de traitement (2-A) d'images est configuré pour analyser les images acquises afin d'identifier des différences entre des caractéristiques d'images incluses dans différentes images de givrage, et d'identifier avec précision, en fonction de ces différences, les conditions de givrage de la surface de l'objet, dans lequel les conditions de givrage comprennent les types de givrage, l'épaisseur du givrage et la zone du givrage ;
dans lequel le système de traitement (2-A) d'images comprend :
une unité d'alerte précoce (201) sur le givrage pour apprécier si du givrage s'est formé sur la surface de l'objet ;
une unité d'analyse (202) de givrage comprenant un module de marquage, un module de calcul et un module d'appréciation, dans lequel le module de marquage est configuré pour marquer l'image avec plusieurs paramètres liés aux conditions de givrage, le module de calcul est configuré pour calculer les paramètres marqués afin d'obtenir des facteurs caractéristiques de ladite image, et ledit module d'appréciation est configuré pour apprécier et obtenir lesdites conditions de givrage de la surface de l'objet sur la base des facteurs caractéristiques ; et
une base de données (203) de conditions de givrage comprenant des données caractéristiques correspondant à différentes conditions de givrage, pour la comparaison avec les facteurs caractéristiques ;
dans lequel l'unité d'analyse (202) de givrage fonctionne en simultanéité avec l'unité d'alerte précoce (201) sur le givrage et peut effectuer une analyse qualitative et quantitative de conditions de givrage spécifiques à la surface de l'objet ;
dans lequel le type de givrage est déterminé et l'épaisseur du givrage est étudiée ;
dans lequel le type de givrage est déterminé par utilisation d'une variance de la valeur de luminosité de pixel en tant que facteur caractéristique pour l'appréciation, et l'épaisseur du givrage est étudiée par utilisation d'une somme de valeurs de luminosité de tous les points de pixel en tant que facteur caractéristique final.

2. Détecteur de givrage dans une image selon la revendication 1, dans lequel le module de marquage marque l'image en fonction de la luminosité de l'image.

3. Détecteur de givrage dans une image selon la revendication 1, dans lequel le module de marquage comprend un module d'analyse d'échelle de gris qui est configuré pour marquer l'image avec plusieurs paramètres d'échelle de gris et/ou un module d'analyse chromatographique qui est configuré pour marquer l'image avec plusieurs paramètres de chromatographie.

4. Détecteur de givrage dans une image selon la revendication 1, dans lequel le système de traitement (2-A) d'images comprend un module de prise de points configuré pour acquérir à partir de l'image au moins une partie de points de pixels, et le module de marquage marque ces points de pixels avec des paramètres.

5. Détecteur de givrage dans une image selon la revendication 1, dans lequel le module de calcul calcule les facteurs caractéristiques sur la base de l'amplitude et/ou de la distribution des paramètres marqués.

6. Détecteur de givrage dans une image selon la revendication 1, dans lequel l'image est divisée en une pluralité de zones, et le module de calcul calcule les facteurs caractéristiques pour chacune des zones.

7. Détecteur de givrage dans une image selon la revendication 1, dans lequel le module de calcul obtient les facteurs caractéristiques par la statistique.

8. Détecteur de givrage dans une image selon la revendication 7, dans lequel une gamme de valeurs pour effectuer le marquage des paramètres via le module de marquage est divisée en une pluralité de sections, et le module de calcul considère la distribution des paramètres marqués dans la pluralité de sections comme les facteurs caractéristiques.

9. Détecteur de givrage dans une image selon la revendication 7, dans lequel le module de calcul calcule des variances et/ou une somme des paramètres marqués qui sont considérés comme les facteurs caractéristiques.

10. Détecteur de givrage d'un avion, comprenant le détecteur de givrage dans une image selon la revendication 1.

11. Procédé pour détecter des conditions de givrage sur la surface d'un objet, comprenant les étapes suivantes, se produisant en simultanéité avec l'étape consistant à apprécier si du givrage s'est formé sur la surface de l'objet :
- acquérir une image de la surface d'objet à détecter,
- analyser l'image afin d'identifier des différences entre des caractéristiques d'images incluses dans différentes images de givrage, et d'identifier avec précision, en fonction de ces différences, les conditions de givrage de la surface de l'objet, dans lequel les conditions de givrage comprennent les types de givrage, l'épaisseur du givrage et la zone du givrage ;
dans lequel l'analyse de l'image comprend :
- marquer l'image avec plusieurs paramètres liés aux conditions de givrage,
- calculer les paramètres marqués afin d'obtenir les facteurs caractéristiques de l'image,
- obtenir, en fonction des facteurs caractéristiques, les conditions de givrage de la surface de l'objet ;
dans lequel le type de givrage est déterminé et l'épaisseur du givrage est étudiée ;
dans lequel le type de givrage est déterminé par utilisation d'une variance de la valeur de luminosité de pixel en tant que facteur caractéristique pour l'appréciation, et l'épaisseur du givrage est étudiée par utilisation d'une somme de valeurs de luminosité de tous les points de pixel en tant que facteur caractéristique final.
